# EUROPEAN PATENT SPECIFICATION

(11) **EP 3 382 879 B1**
(45) Date of publication and mention of the grant of the patent: **08.01.2020**
(21) Application number: 18151765.7
(22) Date of filing: 16.01.2018
(51) Int. Cl.: H02M 7/48

(54) **POWER SUPPLY APPARATUS HAVING POWER SAVING FUNCTION AND AIR CONDITIONER INCLUDING THE SAME**
STROMVERSORGUNGSVORRICHTUNG MIT STROMSPARFUNKTION UND KLIMAANLAGE DAMIT
APPAREIL D'ALIMENTATION COMPORTANT UNE FONCTION D'ÉCONOMIE D'ÉNERGIE ET CLIMATISEUR LE COMPRENANT

(30) Priority: 28.03.2017 KR 20170039175
(43) Date of publication of application: 03.10.2018
(73) Proprietor: LG Electronics Inc., Seoul 07336 (KR)
(72) Inventor: LEE, Wonwoo, 08592 Seoul (KR)
(74) Representative: Vossius & Partner Patentanwälte Rechtsanwälte mbB

(56) References cited:
- EP-A1- 2 803 918
- WO-A1-2017/148390
- KR-A- 20070 059 273
- US-A1- 2008 092 570

## Description

The present invention relates to a power supply apparatus and, more particularly, to a power supply apparatus having a power saving function and an air conditioner including the same.

Generally, a compressor installed at an outdoor unit of an air conditioner uses a motor as a driving source. Alternating current (AC) power is supplied to the motor from a power conversion device.

The power conversion device is normally known as including a rectifier, a power factor controller, and an inverter.

A commercial AC voltage output from a commercial power source is rectified by the rectifier. The voltage rectified by the rectifier is supplied to the inverter. The inverter generates AC power for driving the motor, using the voltage output from the rectifier.

Meanwhile, an air conditioner may further include, in addition to the above-described power conversion device, a switched-mode power supply (SMPS) for supplying power to a controller (or a microcontroller) and other parts of the air conditioner.

In addition, the air conditioner includes communication units for communication between an indoor unit and an outdoor unit. The outdoor unit may be controlled according to operational control of the air conditioner performed mainly by the indoor unit.

If a user stops operating the air conditioner by use of the indoor unit or a predetermined time elapses after the user stops operating the air conditioner by use of a remote controller, the outdoor unit of the air conditioner may enter a standby power state or a power saving mode.

That is, in the power saving mode, power consumption may be reduced by cutting off a part of power supplied to the outdoor unit.

However, even in this power saving mode, the SMPS still operates to thereby consume power so that energy efficiency of the air conditioner may not be high.

US 2008/0092570 A1 discloses an air conditioner and a method of controlling the same, which is capable of minimizing power consumed in an indoor unit and an outdoor unit by cutting off external power supplied to the outdoor unit in a standby mode when it is determined that the air conditioner has a standby operation condition. KR 20070059273 A discloses a power supply apparatus that is provided to reduce standby power consumed in a relay by cutting off the power supplied to the relay in a standby mode.

EP 2 803 918 A1 discloses an air conditioning device including a selection mechanism that prevents a current flow in a power supply wiring in an operation stop period and determines whether to adapt an outdoor unit to a unit that is able to transition to suspended state in which no electric power is supplied to the outdoor unit.

Accordingly, the present invention is directed to a power supply apparatus having a power saving function and an air conditioner including the same, which substantially obviate one or more problems due to limitations and disadvantages of the related art.

An object of the present invention is to provide a power supply apparatus having a power saving function capable of reducing power consumption in a standby power state and an air conditioner including the same.

Another object of the present invention is to provide a power supply apparatus having a power saving function capable of reducing power consumption in a standby power state by cutting off a main power supply of an outdoor unit regardless of an indoor inlet type or an outdoor inlet type of a power source and an air conditioner including the same.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with an aspect of the present invention, an air conditioner having a power saving function as defined in claim 1 includes a first communication unit; a first controller configured to transmit a control signal to the first communication unit; a main power supply including a switched-mode power supply (SMPS) connected to an alternating current power supply and configured to supply power and a standby power switching unit configured to selectively switch on or off power supplied to the SMPS; an auxiliary power supply connected to the AC power supply; a second communication unit connected to the first communication unit via a communication line and configured to receive power from the auxiliary power supply; a switching driver connected to the auxiliary power supply and the second communication unit and configured to supply driving power to the standby power switching unit according to the control signal; and a second controller configured to receive power from the SMPS and selectively supply power to the switching driver.

In addition, the standby power switching unit includes: a first relay configured to operate by the switching driver; and a third relay connected to the first relay in parallel. The standby power switching unit may be connected between the AC power supply and the SMPS.

In addition, the standby power switching unit may further include a relay driver configured to drive the first relay by a driving signal transmitted by the switching driver.

In addition, the switching driver may include: a second relay connected to the auxiliary power supply; a first photocoupler connected to the second relay; and a driving signal generator configured to transmit the driving signal to the relay driver.

In addition, the first relay and the third relay may be relays in which switches are turned on when a power source is supplied and the second relay is a relay in which a switch is turned off when a power source is supplied.

In addition, the relay driver may selectively drive the first relay using the auxiliary power supply.

In addition, the relay driver may include a transistor configured to selectively connect the auxiliary power supply to the first relay.

In addition, the transistor may operate by the driving signal transmitted by the switching driver.

In addition, at least one of the first communication unit and the second communication unit may include a second photocoupler and a third photocoupler which are connected in opposite directions.

In addition, the air conditioner may further include a regulator connected to the SMPS and configured to transmit the driving signal to the second relay and the third relay according to a signal of the second controller.

In addition, the first communication unit and the first controller may be included in an indoor unit, and wherein the main power supply, the auxiliary power supply, the second communication unit, the switching driver and the second controller are included in an outdoor unit.

In addition, the first controller may transmit a control signal for switching to a power saving mode to the first communication unit.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiments of the invention and together with the description serve to explain the principle of the invention. In the drawings:
FIG. 1 is a block diagram of a power supply apparatus according to an embodiment of the present invention;
FIG. 2 is a detailed block diagram of a main power supply of an outdoor unit of an air conditioner according to an embodiment of the present invention;
FIG. 3 is a circuit diagram of an air conditioner according to an embodiment of the present invention;
FIG. 4 is a circuit diagram illustrating an operation of an air conditioner in a normal operation state according to an embodiment of the present invention;
FIG. 5 is a circuit diagram illustrating an operation of an air conditioner during switching to a power saving mode state according to an embodiment of the present invention; and
FIG. 6 is a circuit diagram illustrating an operation of an air conditioner during switching to a normal operation state from a power saving mode according to an embodiment of the present invention.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

While the present invention permits various modifications and alternative forms, specific embodiments thereof are shown by way of example in the drawings, and will herein be described in detail. It should be understood, however, that there is no intent to limit the present invention to the particular forms disclosed, but on the contrary, the present invention is to cover all modifications, equivalents, and alternatives falling within the scope of the invention.

It will be understood that, when an element such as a layer or a substrate is referred to as being "on" another element, it can be directly on the other element or include intervening elements that are present between the element and the other element.

It will be understood that, although the terms first, second, etc. may be used herein to describe various elements, components, regions, layers, and/or area, these elements, components, regions, layers, and/or areas should not be limited by these terms. These terms are only used to distinguish one element, component, region, layer, or areas from another element, component, region, layer, or area.

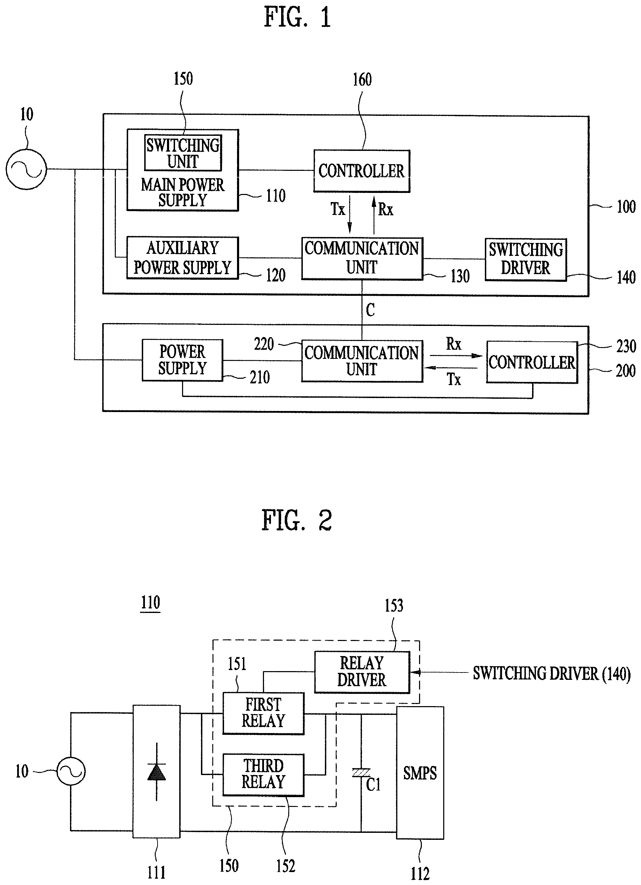

FIG. 1 is a block diagram of a power supply apparatus according to an embodiment of the present invention.

The power supply apparatus of the present invention includes a first device 100 and a second device 200. The first device 100 and the second device 200 may be connected to each other by a communication line C.

The first device 100 and the second device 200 include a first communication unit 130 and a second communication unit 220, respectively. The first device 100 and the second device 200 communicate with each other by the first communication unit 130 and the second communication unit 220.

This communication process may be performed under control of the first controller 160 and the second controller 230.

Through the communication process, the first device 100 enters a power saving mode, thereby reducing power consumption of the apparatus.

Hereinafter, the first device 100 and the second device 200 will be described as devices constituting an air conditioner. That is, the first device 100 and the second device 200 may correspond to an outdoor unit and an indoor unit of the air conditioner, respectively.

Referring to FIG. 1, the air conditioner may normally include the indoor unit 100 installed at an outdoor area and the indoor unit 200 installed at an indoor area. In this case, the outdoor unit 100 and the indoor unit 200 may be connected to each other by the communication line C.

The outdoor unit 100 may include a main power supply 110 connected to an external AC power supply 10, for supplying power to each part of the outdoor unit 100, an auxiliary power supply 120 separately connected to the external AC power supply 10, an outdoor communication unit 130 for communicating with the indoor unit 200, a switching driver 140 for turning on/off the main power supply 110 when a power saving function operates, and an outdoor unit controller 160 for controlling the outdoor unit 100.

The main power supply 110 may include a standby power switching unit 150 for selectively switching on/off power supplied to each part of the outdoor unit 100. The standby power switching unit 150 may be driven by the switching driver 140. The switching driver 140 may start an operation by a signal transmitted by the outdoor communication unit 130.

Herein, the outdoor communication unit 130 may be supplied with power by the auxiliary power supply 120. The outdoor communication unit 130 may transmit and receive a control signal to and from the outdoor unit controller 160. In this case, a signal transmitted to the outdoor communication unit 130 by the outdoor unit controller 160 may be referred to as a transmission signal Tx and a signal received from the outdoor communication unit 130 by the outdoor unit controller 160 may be referred to as a reception signal Rx.

Meanwhile, the indoor unit 200 may include an indoor communication unit 220, and an indoor unit controller 230 for transmitting a control signal (e.g., Tx) to the indoor communication unit 220. In this case, the indoor unit controller 230 may be provided with power by the indoor unit power supply 210 connected to the external AC power supply 10.

That is, both the outdoor unit 100 and the indoor unit 200 are connected to the AC power supply 10 and may be independently supplied with power by the AC power supply 10.

As in the outdoor unit 100, a signal transmitted to the indoor communication unit 220 by the indoor unit controller 230 may be referred to as a transmission signal Tx and a signal received from the indoor communication unit 220 by the indoor unit controller 230 may be referred to as a reception signal Rx.

The switching driver 140 of the outdoor unit 100 may be connected to the auxiliary power supply 120 and the outdoor communication unit 130 to supply driving power to the standby power switching unit 150 according to the control signal Tx transmitted from the indoor unit controller 230 through the indoor communication unit 220.

FIG. 2 is a detailed block diagram of a main power supply of an outdoor unit of an air conditioner according to an embodiment of the present invention.

Referring to FIG. 2, the main power supply 110 of the outdoor unit 100 may include a rectifier 111 connected to the AC power supply 10, a first capacitor C1 in which output of the rectifier 111 is charged, and an SMPS 112 for supplying power to parts including the outdoor unit controller 160 of the outdoor unit 100, using power charged in the first capacitor C1.

The rectifier 111 rectifies power input from the AC power supply 10 and outputs the rectified power to the SMPS 112. To this end, the rectifier 111 may use a full-wave rectification circuit using bridge diodes.

The above-described standby power switching unit 150 may be connected between the AC power supply 10 and the SMPS 112. More specifically, the standby power switching unit 150 may be connected between the rectifier 111 and the first capacitor C1.

The standby power switching unit 150 may include a first relay 151 and a third relay 152.

The standby power switching unit 150 may further include a relay driver 153 for driving the first relay 151.

Herein, the first relay 151 and the third relay 152 may be connected in parallel to be selectively connected between the AC power supply 10 and the SMPS 112.

The first relay 151 may be operated by a driving signal transmitted from the switching driver 140. That is, the first relay 151 may be switched on/off by the driving signal transmitted from the switching driver 140.

Herein, the driving signal transmitted by the switching driver 140 may drive the relay driver 153. Upon receiving the driving signal transmitted by the switching driver 140, the relay driver 153 may drive the first relay 151, using power of the auxiliary power supply 120.

When the air conditioner enters a power saving mode, both the first relay 151 and the third relay 152 are switched off and, therefore, no power is transmitted to the SMPS 112, so that operation of the SMPS 112 may be stopped.

Meanwhile, when the air conditioner is normally operated, at least one of the first relay 151 and the third relay 152 is connected (i.e., switched on) so that the SMPS 112 may be smoothly operated.

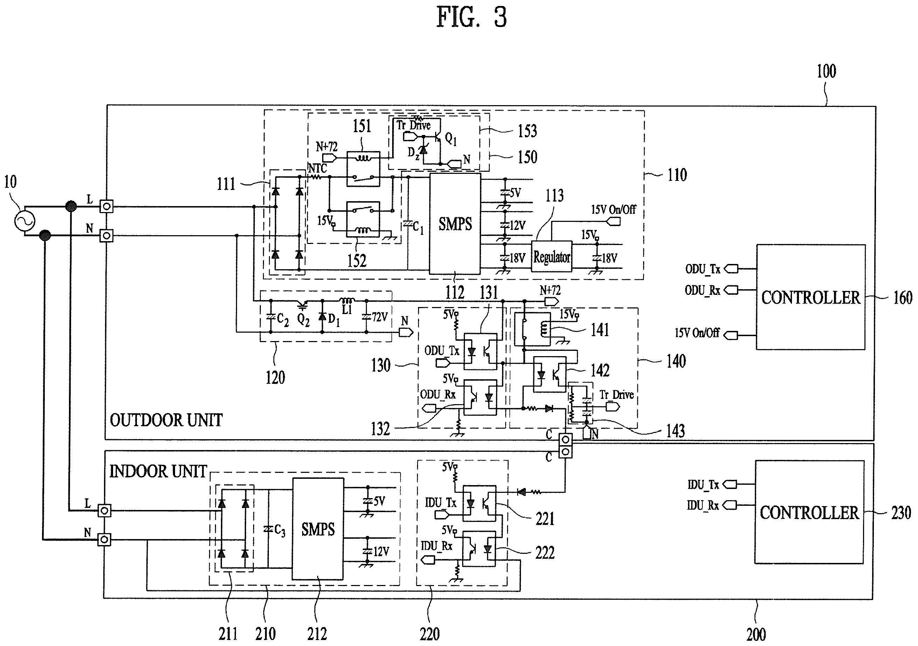

FIG. 3 is a circuit diagram of an air conditioner according to an embodiment of the present invention.

Hereinafter, a circuit configuration of the air conditioner according to an embodiment of the present invention will be described in detail with reference to FIG. 3.

First, the first relay 151 and the third relay 152 of the standby power switching unit 150 may be active high relays in which switches are turned on when power is supplied to inductors thereof.

The first relay 151 may be driven by the auxiliary power supply 120. The auxiliary power supply 120 may supply a voltage of 72V. That is, one terminal N of the auxiliary power supply 120 may be connected to a ground and the other terminal N+72 of the auxiliary power supply 120 may output a signal of a voltage difference higher by 72V than a voltage of the one terminal N.

The one end N and the other end N+72 of the auxiliary power supply 120 may be connected to both terminals of an inductor of the first relay 151. A transistor Q1 for performing a switching operation by the driving signal transmitted by the switching driver 140 may be connected between the one end N and the other end N+72 of the auxiliary power supply 120 connected to the first relay 151. That is, the relay driver 153 may include the transistor Q1 for driving the first relay 151.

A base of the transistor Q1 may be connected to a driving signal input terminal Tr_Drive which is connected to the switching driver 140. Specifically, the driving signal input terminal Tr_Drive may be connected to an output terminal Tr_Drive of a driving signal generator 143 of the switching driver 140.

Accordingly, when the driving signal is transmitted to the relay driver 153 by the switching driver 140 under a specific condition such as switching to a power saving mode, this transistor Q1 may be driven and the first relay 151 may enter an on state.

The auxiliary power supply 120 of the outdoor unit 100 may be comprised of a buck converter. That is, the auxiliary power supply 120 may include a second capacitor C2 located at the foremost stage, a first diode D1, an inductor L1 connected to the first diode D1, a capacitor 72V connected to the first diode D1 in parallel, and a switching element Q2 connected between the second capacitor C2 and the first diode D1.

The buck converter is a converter capable of obtaining an output voltage lower than an input voltage. When the switching element Q2 is turned on, current flows through an inductor-capacitor filter including the inductor L1 and the capacitor 72V and an output voltage is generated at an output terminal.

When the switching element Q2 is turned off, energy which has been stored in the inductor L1 is discharged through the first diode D1 to generate current. Then, a voltage across both terminals of the inductor L1 is transmitted to the output terminal.

Meanwhile, the SMPS 112 may output direct current (DC) voltages of 5V, 12V, and 18V. The outdoor unit controller 160 may be operated by the voltage of 5V output from the SMPS 112.

A regulator 113 may be connected to an output terminal of 18V of the SMPS 112. The regulator 113 may be supplied with an operating signal 15V On/Off (e.g., a signal of 5V) by the outdoor unit controller 160. In this way, upon receiving the operating signal 15V On/Off from the outdoor unit controller 160, the regulator 113 may output a voltage of 15V. When the outdoor unit controller 160 outputs a low signal or the outdoor unit controller 160 is turned off (even in this case, a low signal is output), the regulator 113 does not operate and does not output a voltage of 15V.

Meanwhile, an inductor of the third relay 152 may be connected to the regulator 113. That is, the third relay 152 may be operated by a driving signal of the regulator 113.

The switching driver 140 may include a second relay 141 connected to the other terminal N+72 of the auxiliary power supply 120, a first photocoupler 142 connected to the second relay 141, and a driving signal generator 143 for transmitting a driving signal to the relay driver 153.

Herein, the second relay 141 may be an active low relay in which a switch is turned off when a power source is supplied to an inductor thereof. The inductor of the second relay 141 may be connected to an output terminal of the regulator 113. Accordingly, when the regulator 113 outputs the driving signal of 15V, the second relay 141 may be turned off.

In this case, since the regulator 113 operates according to a signal of the outdoor unit controller 160, the regulator 113 may transmit the driving signal to the second relay 141 and the third relay 142 according to the signal of the outdoor unit controller 160.

When the second relay 141 enters an on state and current flows through the first photocoupler 142, the driving signal of the driving signal generator 143 is transmitted through an output terminal Tr_Drive to an input terminal Tr_Drive of the relay driver 153 so that the transistor Q1 may be driven.

The outdoor communication unit 130 may be connected to the other terminal N+72 of the auxiliary power supply 120. The outdoor communication unit 130 may include a second photocoupler 131 and a third photocoupler 132 which are connected in opposite directions.

Each of the photocouplers 131, 132, and 142 includes a diode and a transistor which are disposed to face each other. Each photocoupler is a component designed such that, when current flows into the diode, current also flows into the transistor and, when current does not flow into the diode, current also does not flow into the transistor.

That is, the diode and transistor of the second photocoupler 131 may be connected in opposite directions to the diode and transistor of the third photocoupler 132. As illustrated in FIG. 3, the transistor of the second photocoupler 131 may be connected to the other terminal N+72 of the auxiliary power supply 120 and the transistor of the second photocoupler 131 may be connected to the diode of the third photocoupler 132. The diode of the third photocoupler 132 may be connected to the indoor communication unit 220 through a communication line C.

The transistor of the second photocoupler 131 and the second relay 141 may be connected to a diode of the first photocoupler 142.

The diode of the second photocoupler 131 may receive a transmission signal ODU_Tx from the outdoor unit controller 160 and the outdoor unit controller 160 may receive a reception signal ODU_Rx through the transistor of the third photocoupler 132.

In this case, the diode of the second photocoupler 131 which receives the transmission signal ODU_Tx through one terminal thereof from the outdoor unit controller 160 may receive a voltage of 5V through the other terminal thereof.

The transistor of the third photocoupler 132 which transmits the reception signal ODU_Rx through one terminal thereof may receive the voltage of 5V through another terminal thereof.

Like the outdoor communication unit 130, the indoor communication unit 220 may include a fourth photocoupler 221 and a fifth photocoupler 222 connected in opposite directions.

That is, a diode of the fourth photocoupler 221 may be connected to the diode of the third photocoupler 132 through the communication line C and may also be connected to a transistor of the fifth photocoupler 222.

The diode of the fourth photocoupler 221 may receive a transmission signal IDU_Tx from the indoor unit controller 230 and the indoor unit controller 230 may receive a reception signal IDU_Rx from the transistor of the fifth photocoupler 222.

In this case, the diode of the fourth photocoupler 221 which receives the transmission signal IDU_Tx from the indoor unit controller 230 through one terminal thereof may receive a voltage of 5V through the other terminal thereof.

The transistor of the fifth photocoupler 222 which transmits the reception signal IDU_Rx through one terminal thereof may receive the voltage of 5V through another terminal thereof.

The indoor power supply 210 may include a rectifier 211, a third capacitor C3, and an SMPS 212. The SMPS 212 may output voltages of 5V and 12V. The indoor unit controller 230 may be operated by the voltage of 5V output from the SMPS 212. The operation and function of the indoor power supply 210 may be the same as those of the outdoor main power supply 110. Accordingly, a repetitive description is omitted.

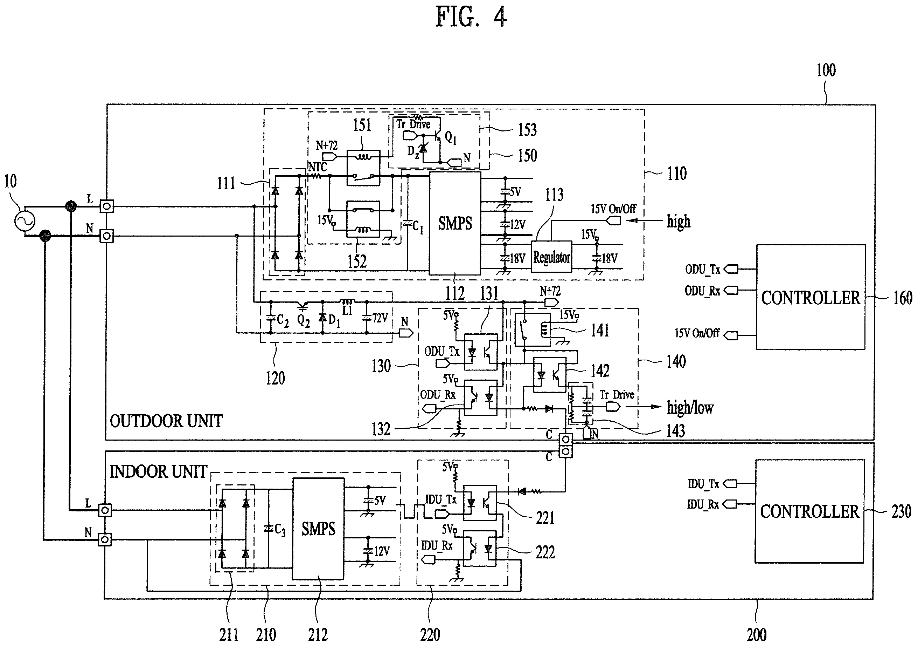

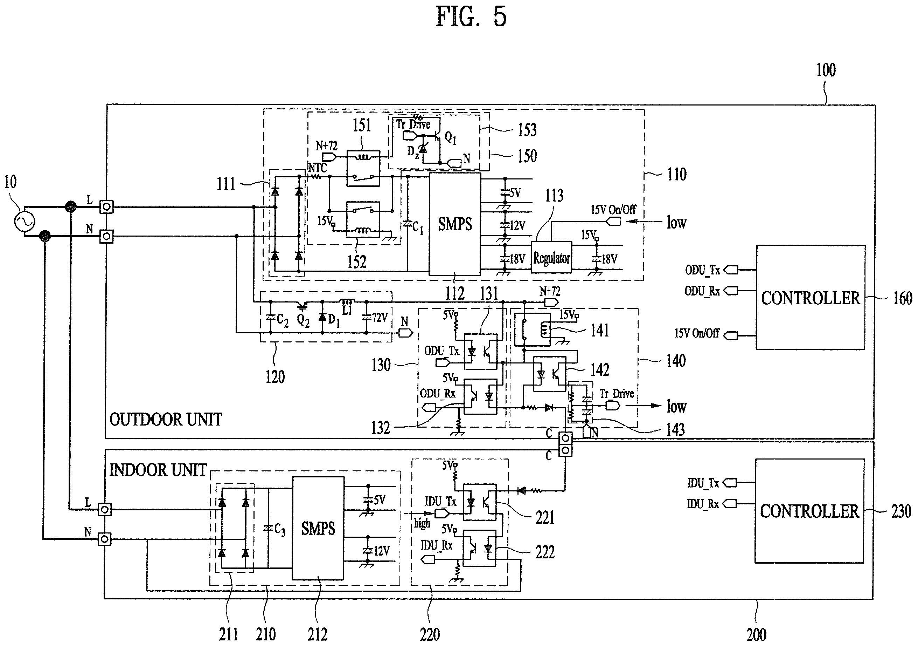

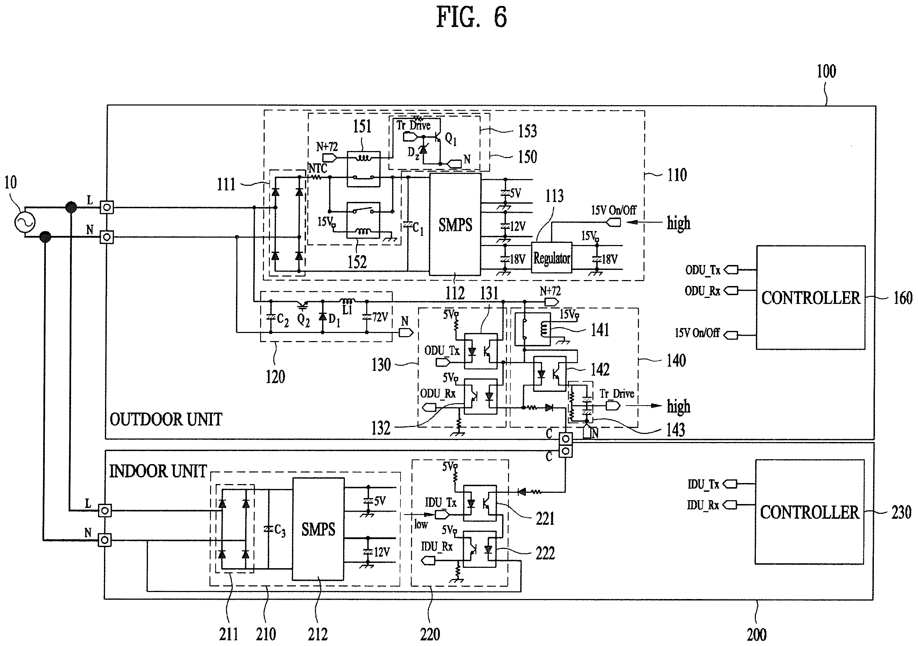

FIGs. 4 to 6 are circuit diagrams illustrating operations of an air conditioner according to embodiments of the present invention. Specifically, FIG. 4 illustrates an operation of an air conditioner in a normal operation state according to an embodiment of the present invention. FIG. 5 illustrates an operation of an air conditioner during switching to a power saving mode according to an embodiment of the present invention. FIG. 6 illustrates an operation of an air conditioner during switching to a normal operation state from a power saving mode according to an embodiment of the present invention.

Hereinafter, an operation of the air conditioner according to an embodiment of the present invention will be described in detail with reference to FIGs. 4 to 6.

First, the operation of the air conditioner in a normal operation state will now be described with reference to FIG. 4.

Referring to FIG. 4, the first relay 151 of the standby power switching unit 150 is in an off state and the third relay 152 of the standby power switching unit 150 is in an on state. Accordingly, the SMPS 112 may receive power through the third relay 152. That is, the SMPS 112 may normally operate.

The outdoor unit controller 160 operates by receiving power from the SMPS 112 and transmits an operation signal 15V On/Off to the regulator 113, so that the regulator 113 outputs a voltage of 15V.

The second relay 141 of the switching driver 140 enters an off state because the regulator 113 outputs the voltage of 15V.

The indoor unit controller 230 repeatedly transmits the On/Off signal (of a square wave form) to the fourth relay 221 of the indoor communication unit 220 so that communication is performed between the outdoor unit 100 and the indoor unit 200.

Herein, if the indoor unit controller 230 transmits a signal through the indoor communication unit 220, this signal may be transmitted to the outdoor communication unit 130 through the communication line C and then is transmitted to the outdoor unit controller 160.

In addition, if the outdoor unit controller 160 transmits a signal through the outdoor communication unit 130, this signal is transmitted to the indoor communication unit 220 through the communication line C and then is transmitted to the indoor unit controller 230.

Through the above scheme, the outdoor unit 100 and the indoor unit 200 exchange signals.

In this process, the switching driver 140 may repeatedly output a high/low signal and then the first relay 151 may repeat an on/off operation. However, the SMPS 112 may stably receive power through the third relay 152.

Next, the operation of the air conditioner during switching to a power saving mode from a normal operation state will be described with reference to FIG. 5.

Referring to FIG. 5, in the case that a user stops operating the air conditioner through the indoor unit 200, the air conditioner may enter a power saving mode. For example, in the case that the user stops operating the air conditioner through the indoor unit 200 by use of a remote controller or in the case that a predetermined time elapses after the user stops operating the air conditioner by use of the remote controller, the air conditioner may switch to a power saving mode.

In this way, in the case that a condition capable of switching to the power saving mode is satisfied, the indoor unit controller 230 transmits a power saving signal to the indoor communication unit 220. Specifically, the indoor unit controller 230 transmits a high signal to the fourth photocoupler 221 of the indoor communication unit 220.

Accordingly, both ends of the fourth photocoupler 221 may have an equal voltage difference or a decreased voltage difference and no current flows through the fourth photocoupler 221.

In this state, since no current flows through the switching driver 140, the switching driver 140 outputs a low signal. Accordingly, the transistor Q1 in the relay driver 153 is turned off.

When the outdoor unit controller 160 transmits a low signal to the regulator 113 (e.g., when the outdoor unit controller 160 outputs a low signal or in the case that power is not supplied to the outdoor unit controller so that the outdoor unit 160 is turned off), the regulator 113 does not output a voltage of 15V.

Then, the third relay 152 is turned off and the second relay 141 is turned on.

Thus, since both the first relay 151 and the third relay 152 are turned off, power is not supplied to the SMPS 112 and an operation of the SMPS 112 is stopped.

That is, when the air conditioner switches to a power saving mode, a power source supplied to the SMPS 112 and the main power supply 110 is cut off, thereby reducing power consumption. While the main power supply including the SMPS 112 consumes power of about 1W or so, power consumed in the air conditioner may be lower than 1W in a power saving mode.

According to the above-described configuration of the present invention, the main power source of the outdoor unit is cut off regardless of an indoor inlet type or an outdoor inlet type of a power source, thereby reducing power consumption in a power saving mode.

Next, an operation of the air conditioner during switching to a normal operation state from a power saving mode according to an embodiment of the present invention will now be described with reference to FIG. 6.

As described above, in a power saving mode, the indoor unit controller 230 continues to transmit a high signal to the fourth photocoupler 221 of the indoor communication unit 220.

A low signal is transmitted to the regulator 113 so that the regulator 113 does not output a voltage of 15V.

In addition, the first relay 151 and the third relay 152 are turned off and the second relay 141 is turned on. Accordingly, a power source supplied to the SMPS 112 and the main power supply 110 is cut off.

In this case, when the air conditioner operates, for example, when a signal for operating the air conditioner is received by a user (e.g., when a user operates the air conditioner by use of a remote controller), the air conditioner switches from a power saving mode to normally operate. This process will now be described.

First, the indoor unit controller 230 transmits a signal for switching to an operation state from a power saving mode to the indoor communication unit 220. Specifically, the indoor unit controller 230 outputs a low signal to the fourth photocoupler 221 of the indoor communication unit 220.

Accordingly, current may flow through the fourth photocoupler 221 by a voltage of 5V supplied by the indoor unit power supply 210.

In this state, current flows through the switching driver 140 and the switching driver 140 outputs a high signal, so that the transistor Q1 in the relay driver 153 is turned on.

Then, the first relay 151 receives power from the auxiliary power supply 120 and is switched on. Thereby, the SMPS 112 enters an on state and the SMPS 112 supplies power to each part of the outdoor unit 100.

As such, the outdoor unit controller 160 also operates and transmits a high signal to the regulator 113 so that the regulator 113 outputs a voltage of 15V.

Then, the third relay 152 is also switched on and power can be stably supplied to the SMPS 112. As a result, the air conditioner including the outdoor unit 100 can normally operate.

The above-described power supply apparatus having a power saving function has been described by way of an example applied to the air conditioner
However, as described above, the present invention is applicable to a power supply apparatus and an apparatus including the power supply apparatus, in which the first device 100 and the second device 200, which are physically divided, operate as one device or the first device 100 and the second apparatus 200 communicate with each other by implementing the first communication unit 130, the second communication unit 220, and an associated configuration.

It will be apparent to those skilled in the art that various modifications and variations can be made in the present invention without departing from the scope of the invention. Thus, it is intended that the present invention cover the modifications and variations of this invention provided they come within the scope of the appended claims.

## Claims

1. An air conditioner having a power saving function, comprising:
a first communication unit (220);
a first controller (230) configured to transmit a control signal to the first communication unit (220);
a main power supply (110) including a switched-mode power supply, SMPS, (112) connected to an alternating current (AC) power supply and configured to supply power and a standby power switching unit (150) configured to selectively switch on or off power supplied to the SMPS (112);
an auxiliary power supply (120) connected to the AC power supply (10);
a second communication unit (130) connected to the first communication unit (220) via a communication line and configured to receive power from the auxiliary power supply (120);
a switching driver (140) connected to the auxiliary power supply (120) and the second communication unit (130) and configured to supply driving power to the standby power switching unit (150) according to the control signal through the first communication unit (220); and
a second controller (160) configured to receive power from the SMPS (112),
wherein the standby power switching unit (150) includes:
a first relay (151) receiving power from the auxiliary power supply (120) and configured to operate by the switching driver (140); and
a third relay (152) receiving power from the SMPS (112) and connected to the first relay (151) in parallel, and configured to operate by the switching driver (140).

2. The air conditioner according to claim 1, wherein the first relay (151) is connected between the AC power supply (10) and the SMPS (112).

3. The air conditioner according to claim 2, wherein the standby power switching unit (130) further includes a relay driver (153) configured to drive the first relay (151) by a driving signal transmitted by the switching driver (140).

4. The air conditioner according to claim 3, wherein the switching driver (140) includes:
a second relay (141) connected to the auxiliary power supply (120);
a first photocoupler (142) connected to the second relay (141); and
a driving signal generator (143) configured to transmit the driving signal to the relay driver (153).

5. The air conditioner according to claim 4, wherein the first relay (151) and the third relay (152) are relays in which switches are turned on when a power source is supplied and the second relay (141) is a relay in which a switch is turned off when a power source is supplied.

6. The air conditioner according to any one of claims 3 to 5, wherein the relay driver (153) selectively drives the first relay (151) using the auxiliary power supply (120).

7. The air conditioner according to claim 6, wherein the relay driver (153) includes a transistor configured to selectively connect the auxiliary power supply (120) to the first relay (151).

8. The air conditioner according to claim 7, wherein the transistor operates by the driving signal transmitted by the switching driver (140).

9. The air conditioner according to any one of claims 1 to 8, wherein at least one of the first communication unit (220) and the second communication unit (130) includes a second photocoupler (131) and a third photocoupler (132) which are connected in opposite directions.

10. The air conditioner according to any one of claims 4 to 9, further comprising a regulator (113) connected to the SMPS (112) and configured to transmit the driving signal to the second relay (141) and the third relay (152) according to a signal of the second controller (160).

11. The air conditioner according to any one of claims 1 to 10, wherein the first communication unit (220) and the first controller (230) are included in an indoor unit (200), and wherein the main power supply (110), the auxiliary power supply (120), the second communication unit (130), the switching driver (140) and the second controller (160) are included in an outdoor unit (100).

12. The air conditioner according to claim 11, wherein the first controller (230) transmits a control signal for switching to a power saving mode to the first communication unit (220).

13. The air conditioner according to any one of claims 1 to 12, wherein the first relay (151) is switched on by the switch driver (140), when the first communication unit (220) receives a signal for switching to an operation state from a power saving mode; and
wherein the third relay (152) is switched off by the switching driver (140), when the first communication unit (220) receives a signal for switching to a power saving mode.

## Patentansprüche

1. Klimaanlage mit einer Stromsparfunktion, die aufweist:
eine erste Kommunikationseinheit (220);
eine erste Steuereinrichtung (230), die konfiguriert ist, ein Steuersignal an die erste Kommunikationseinheit (220) zu senden;
eine Hauptstromversorgung (110), die ein Schaltnetzteil, SMPS, (112), das mit einer Wechselstrom- (AC) Versorgung verbunden und konfiguriert ist, Strom zu liefern, und eine Bereitschaftsstromschalteinheit (150) aufweist, die konfiguriert ist, selektiv den Strom ein- oder auszuschalten, der dem SMPS (112) zugeführt wird;
eine Hilfsstromversorgung (120), die mit der Wechselstromversorgung (10) verbunden ist;
eine zweite Kommunikationseinheit (130), die mit der ersten Kommunikationseinheit (220) über eine Kommunikationsleitung verbunden und konfiguriert ist, Strom von der Hilfsstromversorgung (120) zu erhalten;
einen Schalttreiber (140), der mit der Hilfsstromversorgung (120) und der zweiten Kommunikationseinheit (130) verbunden und konfiguriert ist, der Bereitschaftsstromschalteinheit (150) gemäß dem Steuersignal durch die erste Kommunikationseinheit (220) Ansteuerstrom zuzuführen; und
eine zweite Steuereinrichtung (160), die konfiguriert ist, Strom von der SMPS (112) zu erhalten,
wobei die Bereitschaftsstromschalteinheit (150) aufweist:
ein erstes Relais (151), das Strom von der Hilfsstromversorgung (120) erhält und konfiguriert ist, durch den Schalttreiber (140) zu arbeiten; und
ein drittes Relais (152), das Strom vom SMPS (112) erhält und zum ersten Relais (151) parallelgeschaltet ist und konfiguriert ist, durch den Schalttreiber (140) zu arbeiten.

2. Klimaanlage nach Anspruch 1, wobei das erste Relais (151) zwischen die Wechselstromversorgung (10) und das SMPS (112) geschaltet ist.

3. Klimaanlage nach Anspruch 2, wobei die Bereitschaftsstromschalteinheit (130) ferner einen Relaistreiber (153) aufweist, der konfiguriert ist, das erste Relais (151) durch ein Ansteuersignal anzusteuern, das durch den Schalttreiber (140) senden wird.

4. Klimaanlage nach Anspruch 3, wobei der Schalttreiber (140) aufweist:
ein zweites Relais (141), das mit der Hilfsstromversorgung (120) verbunden ist;
einen ersten Optokoppler (142), der mit dem zweiten Relais (141) verbunden ist; und
einen Ansteuersignalgenerator (143), der konfiguriert ist, das Ansteuersignal an den Relaistreiber (153) zu senden.

5. Klimaanlage nach Anspruch 4, wobei das erste Relais (151) und das dritte Relais (152) Relais sind, in denen Schalter eingeschaltet werden, wenn eine Stromquelle zugeführt wird, und das zweite Relais (141) ein Relais ist, in dem ein Schalter ausgeschaltet wird, wenn eine Stromquelle zugeführt wird.

6. Klimaanlage nach einem der Ansprüche 3 bis 5, wobei der Relaistreiber (153) das erste Relais (151) unter Verwendung der Hilfsstromversorgung (120) selektiv ansteuert.

7. Klimaanlage nach Anspruch 6, wobei der Relaistreiber (153) einen Transistor aufweist, der konfiguriert ist, die Hilfsstromversorgung (120) selektiv mit dem ersten Relais (151) zu verbinden.

8. Klimaanlage nach Anspruch 7, wobei der Transistor durch das Ansteuersignal arbeitet, das durch den Schalttreiber (140) gesendet wird.

9. Klimaanlage nach einem der Ansprüche 1 bis 8, wobei die erste Kommunikationseinheit (220) und/oder die zweite Kommunikationseinheit (130) einen zweiten Optokoppler (131) und einen dritten Optokoppler (132) aufweisen, die in entgegengesetzte Richtungen geschaltet sind.

10. Klimaanlage nach einem der Ansprüche 4 bis 9, die ferner einen Regler (113) aufweist, der mit dem SMPS (112) verbunden und konfiguriert ist, das Ansteuersignal zum zweiten Relais (141) und zum dritten Relais (152) gemäß einem Signal der zweiten Steuereinrichtung (160) zu senden.

11. Klimaanlage nach einem der Ansprüche 1 bis 10, wobei die erste Kommunikationseinheit (220) und die erste Steuereinrichtung (230) in einer Inneneinheit (200) enthalten sind, und wobei die Hauptstromversorgung (110), die Hilfsstromversorgung (120), die zweite Kommunikationseinheit (130), der Schalttreiber (140) und die zweite Steuereinrichtung (160) in einer Außeneinheit (100) enthalten sind.

12. Klimaanlage nach Anspruch 11, wobei die erste Steuereinrichtung (230) ein Steuersignal zum Umschalten auf eine Stromsparbetriebsart an die erste Kommunikationseinheit (220) sendet.

13. Klimaanlage nach einem der Ansprüche 1 bis 12, wobei das erste Relais (151) durch den Schalttreiber (140) eingeschaltet wird, wenn die erste Kommunikationseinheit (220) ein Signal zum Umschalten aus einer Stromsparbetriebsart auf einen Betriebszustand empfängt; und
wobei das dritte Relais (152) durch den Schalttreiber (140) ausgeschaltet wird, wenn die erste Kommunikationseinheit (220) ein Signal zum Umschalten auf eine Stromsparbetriebsart empfängt.

## Revendications

1. Climatiseur doté d'une fonction d'économie d'énergie, comprenant :
une première unité de communication (220) ;
un premier contrôleur (230) prévu pour transmettre un signal de commande à la première unité de communication (220) ;
une alimentation électrique principale (110) comprenant une alimentation à découpage SMPS (112) reliée à une alimentation à courant alternatif CA et prévue pour une fourniture d'énergie, et une unité de commutation de puissance de veille (150) prévue pour activer ou désactiver sélectivement la fourniture d'énergie à la SMPS (112) ;
une alimentation électrique auxiliaire (120) reliée à l'alimentation à CA (10) ;
une deuxième unité de communication (130) reliée à la première unité de communication (220) par une ligne de communication et prévue pour recevoir de l'énergie de l'alimentation électrique auxiliaire (120) ;
un circuit d'attaque de commutation (140) relié à l'alimentation électrique auxiliaire (120) et à la deuxième unité de communication (130) et prévu pour fournir du courant d'attaque à l'unité de commutation de puissance de veille (150) en fonction du signal de commande de la première unité de communication (220) ; et
un deuxième contrôleur (160) prévu pour recevoir de l'énergie de la SMPS (112),
l'unité de commutation de puissance de veille (150) comprenant :
un premier relais (151) recevant de l'énergie de l'alimentation électrique auxiliaire (120) et prévu pour être activé par le circuit d'attaque de commutation (140) ; et
un troisième relais (152) recevant de l'énergie de la SMPS (112) et connecté en parallèle au premier relais (151), et prévu pour être activé par le circuit d'attaque de commutation (140).

2. Climatiseur selon la revendication 1, où le premier relais (151) est connecté entre l'alimentation à CA (10) et la SMPS (112).

3. Climatiseur selon la revendication 2, où l'unité de commutation de puissance de veille (130) comprend en outre un circuit d'attaque de relais (153) prévu pour exciter le premier relais (151) par un signal d'attaque transmis par le circuit d'attaque de commutation (140).

4. Climatiseur selon la revendication 3, où le circuit d'attaque de commutation (140) comprend :
un deuxième relais (141) relié à l'alimentation électrique auxiliaire (120) ;
un premier photocoupleur (142) relié au deuxième relais (141) ; et
un générateur de signal d'attaque (143) prévu pour transmit le signal d'attaque to le circuit d'attaque de relais (153).

5. Climatiseur selon la revendication 4, où le premier relais (151) et le troisième relais (152) sont des relais où des commutateurs sont activés en cas d'alimentation d'une source d'énergie, et où le deuxième relais (141) est un relais où un commutateur est désactivé en cas d'alimentation d'une source d'énergie.

6. Climatiseur selon l'une des revendications 3 à 5, où le circuit d'attaque de relais (153) excite sélectivement le premier relais (151) au moyen de l'alimentation électrique auxiliaire (120).

7. Climatiseur selon la revendication 6, où le circuit d'attaque de relais (153) comprend un transistor prévu pour connecter sélectivement l'alimentation électrique auxiliaire (120) au premier relais (151).

8. Climatiseur selon la revendication 7, où le transistor est activé par le signal d'attaque transmis par le circuit d'attaque de commutation (140).

9. Climatiseur selon l'une des revendications 1 à 8, où la première unité de communication (220) et/ou la deuxième unité de communication (130) comprennent un deuxième photocoupleur (131) et un troisième photocoupleur (132) connectés dans des directions opposées.

10. Climatiseur selon l'une des revendications 4 à 9, comprenant en outre un régulateur (113) relié à la SMPS (112) et prévu pour transmettre le signal d'attaque au deuxième relais (141) et au troisième relais (152) en fonction d'un signal du deuxième contrôleur (160).

11. Climatiseur selon l'une des revendications 1 à 10, où la première unité de communication (220) et le premier contrôleur (230) sont compris dans une unité intérieure (200), et où l'alimentation électrique principale (110), l'alimentation électrique auxiliaire (120), la deuxième unité de communication (130), le circuit d'attaque de commutation (140) et le deuxième contrôleur (160) sont compris dans une unité extérieure (100).

12. Climatiseur selon la revendication 11, où le premier contrôleur (230) transmet un signal de commande à la première unité de communication (220) pour commutation vers un mode d'économie d'énergie.

13. Climatiseur selon l'une des revendications 1 à 12, où le premier relais (151) est activé par le circuit d'attaque de commutation (140) si la première unité de communication (220) reçoit un signal de commutation vers un état de fonctionnement depuis un mode d'économie d'énergie ; et
où le troisième relais (152) est désactivé par le circuit d'attaque de commutation (140) si la première unité de communication (220) reçoit un signal de commutation vers un mode d'économie d'énergie.
